# DEMANDE DE BREVET EUROPEEN

(11) **EP 2 821 685 A1**
(43) Date de publication de la demande: **07.01.2015**
(21) Numéro de dépôt: 14175258.4
(22) Date de dépôt: 01.07.2014
(51) Int. Cl.: F16L 33/04, F16L 59/16, F16L 21/06, F16L 23/08

(54) **Dispositif de serrage comprenant un collier et un manchon**

(30) Priorité: 03.07.2013 FR 1356494
(71) Demandeur: Etablissements CAILLAU, 92130 Issy-les-Moulineaux (FR)
(72) Inventeur: Drivon, Stéphane, 41200 Romorantin (FR); Prevot, Fabrice, 41130 Selles-sur-Cher (FR); Rigollet, Nicolas, 41200 Romorantin (FR)
(74) Mandataire: Intès, Didier Gérard André

(57) **Abrégé**

Le dispositif de serrage comprend un collier de serrage (10) ayant une ceinture (12) apte à être serrée. Le dispositif comprend en outre un manchon extérieur (16) porté par le collier (10) en étant disposé autour de la ceinture, le manchon s'étendant axialement de part et d'autre de la ceinture.

## Description

La présente invention concerne un dispositif de serrage comprenant un collier de serrage ayant une ceinture apte à être serrée.

On connaît des dispositifs de ce type, dont la ceinture sert à raccorder deux objets en les serrant l'un sur l'autre ou l'un contre l'autre. Il s'agit par exemple d'un tube et d'un embout sur lequel le tube est emmanché, ou bien de deux tubes disposés en bout à bout, dont les extrémités en contact sont évasées pour se loger dans un creux formé sur la périphérie interne de la ceinture du collier.

Par exemple, les documents EP 1 451 498 et US 3 964 773 divulguent des dispositifs utilisés pour cette dernière application.

Les objets serrés à l'aide du dispositif de serrage peuvent soumis à des températures relativement élevés. En particulier, il peut s'agir de deux tubes emmanchés l'un sur l'autre ou disposés en bout à bout, dans lesquels peut circuler un fluide à température élevée, par exemple des tubes d'échappement pour un moteur à combustion, en particulier du type utilisé dans les véhicules.

Dans ce cas, il est souvent souhaité de limiter la transmission de chaleur vers l'extérieur. On cherche en effet à éviter que la paroi externe des objets serrés ne soit brûlante, ce qui pourrait rendre dangereux tout contact avec cette paroi.

Pour cela, les objets que le dispositif sert à raccorder peuvent être enveloppés d'une gaine de protection thermique. Cependant, dans la région dans laquelle se trouve le dispositif de serrage, cette gaine est interrompue pour permettre le serrage dans cette région. On pourrait imaginer de disposer une nouvelle gaine autour du dispositif de serrage une fois le serrage réalisé, mais cela nuirait au démontage et au réajustement du serrage. Il en résulte que, s'il est possible de limiter la transmission de chaleur sur la quasi-totalité de la longueur des objets raccordés grâce au dispositif, cela n'est pas possible dans la région dans laquelle se trouve le dispositif de serrage.

L'invention vise à proposer un dispositif de serrage qui remédie au moins substantiellement aux inconvénients précités.

Ce but est atteint grâce au fait que le dispositif comprend, en outre, un manchon extérieur porté par le collier en étant disposé autour de la ceinture, ledit manchon s'étendant axialement de part et d'autre de la ceinture.

Ainsi, le manchon joue le rôle d'un manchon local de protection, dans la région dans laquelle se trouve le collier, mais il dépasse axialement de part et d'autre de la ceinture, de sorte qu'il peut aisément venir en recouvrement avec des gaines ou analogues, disposées sur les objets raccordés, pour assurer une protection thermique, c'est-à-dire limiter la transmission de chaleur à l'extérieur. En quelque sorte, le manchon réalise un pontage de l'interruption de la protection thermique, dans zone de serrage ou de raccordement, dans laquelle est disposé le dispositif de serrage. Ainsi, le serrage est assuré par la ceinture, de dimension axiale (correspondant à la largeur de la ceinture) limitée. De ce fait, les objets raccordés peuvent être revêtus d'une gaine de protection interrompue seulement sur une longueur axiale limitée, juste avant et juste après la ceinture (par exemple : juste avant les évasés des tubes formés à leurs extrémités libres respectives). Cependant, le manchon qui est porté par le collier s'étend axialement de part et d'autre de la ceinture et vient donc en recouvrement de la gaine de protection ou analogue, ce qui permet en fait une continuité de la protection thermique.

Selon un mode de réalisation, il existe un jeu entre la périphérie externe de la ceinture et la périphérie interne du manchon.

Lorsque le dispositif serre un objet, la ceinture est directement en contact avec cet objet. Ainsi, si l'objet est chaud, étant rappelé que la gaine de protection est interrompue dans la région de la ceinture, la chaleur de l'objet se transmet par conduction à la ceinture. En faisant en sorte qu'il existe un jeu entre la périphérie externe de la ceinture et la périphérie interne du manchon, on permet d'éviter une transmission de la chaleur par conduction dans toute la zone dans laquelle existe ce jeu.

Comme on le verra dans la suite, le manchon peut être fixé au collier, par exemple via la ceinture de ce dernier. On fait alors en sorte que le jeu précité existe sur l'intégralité des surfaces en regard de la ceinture et du manchon, exception faite de la ou des zones de fixation, qui sont alors de dimensions réduites. Dans ce cas, la transmission de chaleur par conduction est extrêmement faible.

On relève également que le jeu précité permet d'éviter les contacts vibrants entre la ceinture et le manchon et élimine donc des bruits de vibrations, ce qui est particulièrement appréciable lorsque le dispositif de serrage sert au raccordement de tubes d'échappement pour un moteur de véhicule.

Selon un mode de réalisation, la largeur du manchon, mesurée selon l'axe de la ceinture, est au moins égale à trois fois la largeur de la ceinture.

Le manchon dépasse ainsi selon la direction de l'axe de la ceinture, de part et d'autre de cette dernière, sur une longueur en général suffisante pour assurer une continuité axiale avec une gaine de protection thermique disposée autour des objets raccordés.

Selon un mode de réalisation, le manchon est fixé au collier en au moins deux zones de fixation espacées.

La fixation peut ainsi être réalisée de manière simple, sans nuire à la qualité du serrage, car en choisissant des zones de fixation espacées, on évite de trop rigidifier le contact entre le manchon et le collier de serrage. De plus, comme indiqué précédemment, le choix de zones de fixation espacées permet de ménager un jeu entre la périphérie externe de la ceinture et la périphérie interne du manchon sur l'intégralité de leurs surfaces en regard, exception faite des zones de fixation.

Selon un mode de réalisation, le manchon présente des bossages qui sont en saillie sur la face interne du manchon et qui coopèrent avec la ceinture.

On peut choisir qu'au moins une partie des bossages servent de zone de fixation.

Ces bossages peuvent donc servir d'entretoises et être également utilisés pour la fixation.

Selon un mode de réalisation, le manchon est fixé à la ceinture par soudage ou clinchage.

Selon un mode de réalisation, le manchon présente des pattes de fixation aptes à coopérer avec le collier.

Selon un mode de réalisation, le manchon coopère avec le collier par clipsage ou accrochage.

Le collier et le manchon peuvent alors être fabriqués séparément, et être assemblés à volonté.

Selon un mode de réalisation, le collier présente des oreilles de serrage aptes à être rapprochées l'une de l'autre par des moyens de serrage, et le manchon est porté par le collier via au moins l'un des éléments constitués par les oreilles de serrage et les moyens de serrage.

Selon un mode de réalisation, le collier présente des oreilles de serrage en saillie radiale par rapport à la ceinture, et le manchon présente une fenêtre à travers laquelle les oreilles de serrage dépassent.

Ainsi, le manchon s'étend également dans la région des oreilles de serrage, latéralement (c'est-à-dire selon la direction axiale de la ceinture) de part et d'autre de ces dernières. La présence de la fenêtre permet donc de préserver l'accès aux oreilles de serrage pour réaliser le serrage du collier, mais les bandes marginales du manchon situées de part et d'autre de la fenêtre jouent leur rôle de protection comme le reste du manchon.

Dans ce cas, selon une possibilité, le manchon présente une première extrémité située au voisinage de la première oreille de serrage et une deuxième extrémité, qui présente la fenêtre et dont le bout libre coopère avec la première extrémité.

Ainsi, le manchon est enroulé sur plus d'un tour, et offre une protection efficace, interrompue seulement dans la région de la fenêtre à travers laquelle les oreilles de serrage dépassent.

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
- la figure 1 est une vue en perspective d'un dispositif de serrage selon un premier mode de réalisation de l'invention ;
- la figure 2 est une vue de côté du dispositif de la figure 1 ;
- la figure 3 est également une vue de côté, montrant une variante de réalisation ;
- la figure 4 est une vue en perspective, montrant une autre variante ;
- la figure 5 est une vue de côté, montrant encore une autre variante ;
- la figure 6 montre la même variante que la figure 5, sans la vis de serrage du collier, pour une meilleure compréhension ;
- la figure 7 est une vue en perspective montrant une autre variante du dispositif de serrage ;
- la figure 8 est une coupe dans le plan VIII-VIII de la figure 7 ;
- la figure 9 est une vue en perspective montrant un deuxième mode de réalisation ; et
- la figure 10 est une vue en perspective selon la flèche X de la figure 9.

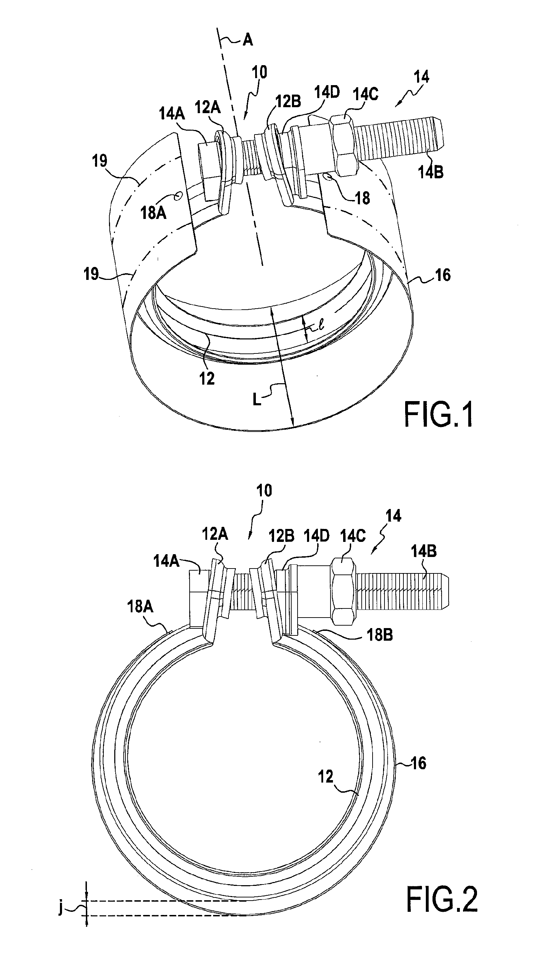

La figure 1 montre un dispositif de serrage comprenant un collier de serrage 10, avec une ceinture 12 et des oreilles de serrage relevées radialement, respectivement 12A et 12B. Ces oreilles sont percées et traversées par la tige 14B d'une vis de serrage 14, dont la tête 14A est en appui contre l'oreille 12A et qui peut être serrée contre l'oreille 12B par un écrou 14C.

Par ailleurs, pour redresser l'effort de serrage et favoriser la qualité du serrage, une entretoise 14D peut être disposée entre l'écrou 14C et l'oreille 12B.

Le dispositif comprend également un manchon extérieur 16 qui est porté par le collier 10. Sur la figure 1, on a représenté l'axe A de la ceinture, et l'on voit que le manchon 16 s'étend axialement de part et d'autre de la ceinture, en étant enroulé sur lui-même sensiblement autour du même axe A. En l'espèce, la largeur L du manchon 16, mesurée selon l'axe A, est au moins égale à trois fois la largeur l de la ceinture. Lorsque, comme dans l'exemple représenté, la ceinture est centrée axialement par rapport au manchon, cela signifie que, sur chaque côté de la ceinture, le manchon dépasse d'une largeur au moins sensiblement égale à la largeur l de la ceinture. En l'espèce, la largeur L est de l'ordre de 4 fois la largeur l, de sorte que de part et d'autre de la ceinture, le manchon dépasse sur une largeur sensiblement égale à 1,5 fois la largeur l. Selon les applications et la conformation des objets serrés, on peut souhaiter ne pas centrer axialement la ceinture par rapport au manchon, en faisant au contraire en sorte que ce dernier dépasse davantage d'un côté de la ceinture que de l'autre.

En l'espèce, le dispositif sert à serrer des tubes disposés en bout à bout, et dont les extrémités libres présentent des évasés en saillie radiale vers l'extérieur. Ceci correspond à ce qui est décrit, par exemple dans le document EP 1 451 498. Ainsi, la périphérie interne de la ceinture 12 est conformée en creux de manière à pouvoir recevoir les évasés précités. En section axiale, la ceinture a par exemple une forme sensiblement en V ou en U.

Le manchon 16 est porté par le collier 10. En l'espèce, le manchon 16 est fixé à la ceinture 12 en deux points de fixation, respectivement 18A et 18B. Il s'agit en particulier d'une fixation par soudage ou par clinchage On définit les zones de fixation 18A et 18B comme étant des points de fixation, en raison de leurs surfaces réduites. Par exemple, les points de fixation peuvent avoir une forme globalement circulaire, et un diamètre compris entre 1 et 4 mm. Ainsi, la surface des points de fixation pourrait être comprise entre 0,8 mm² et 20 mm². Elle sera préférentiellement comprise entre 2 et 12 mm².

On voit sur la figure 2 qu'un jeu j est ménagé entre la périphérie externe de la ceinture 12 et la périphérie interne en regard du manchon 16 sur la totalité des surfaces en regard entre ces deux éléments, à l'exception des points de fixation 18A et 18B. Le manchon peut présenter un diamètre nominal supérieur au diamètre initial de la ceinture, son rayon de courbure étant diminué dans la zone des points de fixation 18A et 18B pour permettre la fixation. Le j est préservé lorsque le collier est serré, comme le montrent les figures 1 et 2.

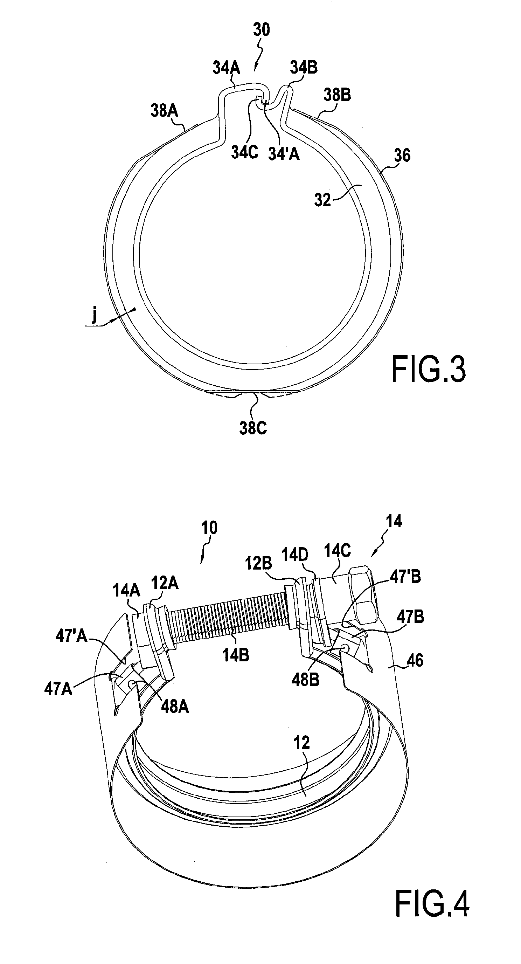

On décrit maintenant la variante de la figure 3. Sur cette variante, le dispositif comprend un collier de serrage 30 et un manchon 36 porté par ce collier. Le collier 30 est analogue au collier 10 de la figure 1, sauf en ce qui concerne ses moyens de serrage. Il comporte en effet une ceinture 32 analogue à la ceinture 12 du collier 10, mais ses moyens de serrage comprennent une première oreille en forme de crochet 34A formé à une première extrémité de la ceinture, et une deuxième oreille 34B en forme de patte relevée, formée à l'extrémité opposée. Pour l'accrochage, le bord libre 34'A du crochet vient s'accrocher derrière l'oreille 34B. La figure 3 montre le collier dans un état de pré-accrochage, dans lequel le bord libre 34'A du crochet est accroché derrière une patte relevée 34C située à l'avant de l'oreille 34B. Le collier est ainsi fermé mais non serré.

Le manchon 36 est fixé sur la ceinture 32. En l'espèce, cette fixation est réalisée en trois zones de fixation respectivement 38A, 38B et 38C. Les zones de fixation 38A et 38B sont respectivement proches du crochet 34A et de l'oreille 34B. La zone de fixation 38C est quant à elle sensiblement diamétralement opposée aux extrémités libres qui portent l'oreille et le crochet. Comme dans l'exemple de la figure précédente, un jeu j est ménagé entre le manchon et la ceinture, sauf dans les zones de fixation. Ces zones de fixation sont des points de fixation, de surfaces analogues à ce qui a été précédemment mentionné en référence à la figure 1.

En l'occurrence, pour préserver le jeu j, les zones de fixation sont réalisées dans des méplats du manchon 36. Comme indiqué en trait interrompu dans la région de la zone 38C, on pourrait remplacer ces méplats par des incurvations vers l'intérieur, de manière à augmenter le jeu j dès le voisinage de la zone de fixation.

La figure 4 montre une variante de réalisation qui utilise le même collier 10 (représenté ici à l'état non serré) que celui de la figure 1. Cependant, le manchon 46 est légèrement différent du manchon 16 de la figure 1. En effet, les zones de fixation sont réalisées dans des languettes, respectivement 47A et 47B, qui sont découpées dans le manchon et déformées de manière à venir épouser la forme de la périphérie externe de la ceinture 12. Ainsi, dans l'exemple représenté, les extrémités respectives du manchon 46 présentent des découpes, respectivement 47'A et 47'B, dans lesquelles sont ainsi formées les languettes 47A et 47B. Les languettes sont déformées pour adopter la forme de ponts en V ou en U, dont les ailes sont plaquées sur les ailes de la périphérie externe de la ceinture 12. Chacune des ailes des languettes conformées en ponts est ainsi fixée à la ceinture, par exemple par un point de soudure ou de clinchage, tel qu'indiqué respectivement par les références 48A et 48B sur celles des ailes qui sont visibles sur la figure 4. Les languettes découpées et pliées jouent ainsi le rôle de pattes de fixation, par lesquelles le manchon est fixé au collier ou, comme en l'espèce, à la ceinture.

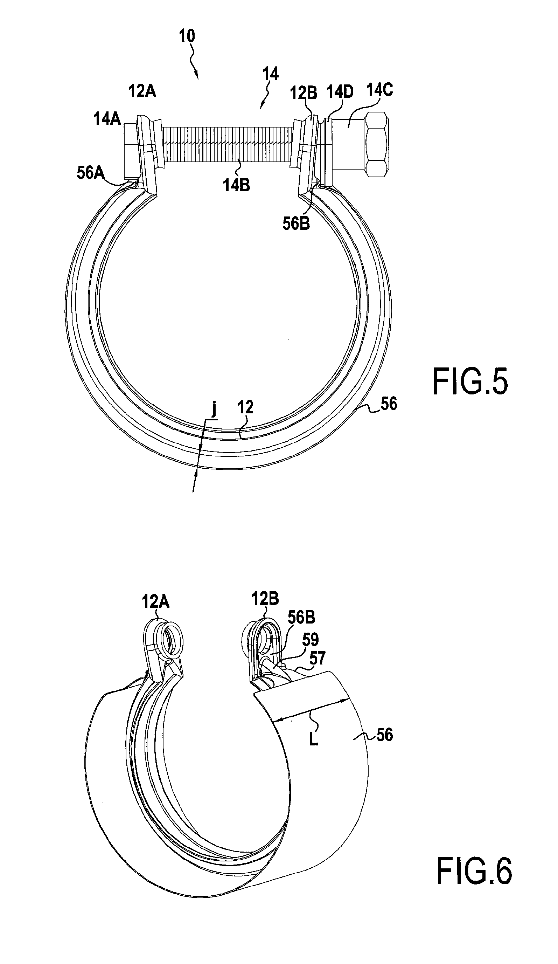

La figure 5 montre une autre variante de réalisation, dans laquelle le manchon est également fixé au collier par des pattes de fixation. Dans l'exemple représenté, le collier 10 (représenté ici à l'état non serré) est analogue à celui de la figure 1. Le manchon 56 est globalement analogue au manchon 16 et on voit qu'il est porté par le collier avec un jeu j par rapport à la ceinture. Cependant, le manchon 56 diffère du manchon 16 en ce qu'il est fixé au collier par des pattes de fixation, respectivement 56A et 56B, qui coopèrent avec au moins l'un des éléments constitués par les oreilles de serrage 12A et 12B, et par les moyens de serrage (vis 14) du collier.

En effet, comme on le voit mieux sur la figure 6, les extrémités du manchon sont repliées radialement pour présenter des pattes de fixation, ainsi disposées contre les faces arrière des oreilles de serrage 12A et 12B. En l'espèce, comme on le voit pour la patte 56B sur la figure 6, ces pattes de fixation sont embouties de manière à épouser le contour interne des oreilles 12A et 12B. De plus, les pattes de fixation sont formées dans des languettes 57 dont la largeur est évidemment inférieure à celle L du manchon, de manière que la largeur des pattes de fixation 56A et 56B corresponde à celle des oreilles de serrage 12A et 12B. Pour rigidifier les pattes de fixation 56A et 56B, ces languettes 57 présentent chacune une nervure de rigidification 59 dans sa zone de pliage, la zone de pliage étant la zone dans laquelle une languette 57 est redressée pour former la patte de fixation 56A ou 56B proprement dite. Lors du serrage du collier, les pattes de fixation 56A et 56B sont prises entre les oreilles 12A, 12B et la tête 14A de la vis 14 ou l'écrou/l'entretoise 14C/14D.

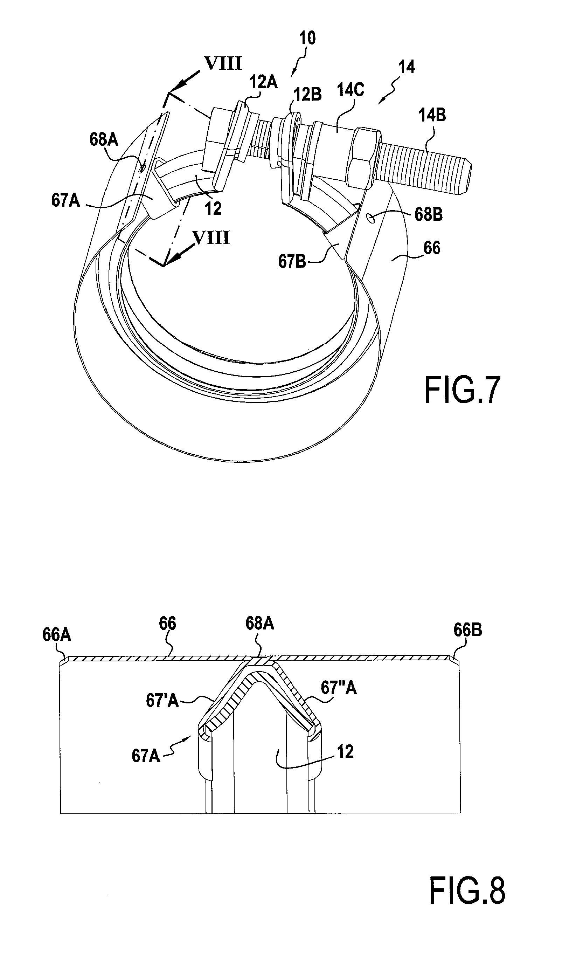

Les figures 7 et 8 illustrent un autre mode de fixation du manchon au collier. Sur la figure 7, le collier (représenté ici à l'état serré) est encore analogue au collier 10 de la figure 1. Le manchon 66 est analogue au manchon précédemment décrit, sauf en ce qui concerne son mode de fixation au collier. On voit en effet sur les figures 7 et 8 que le manchon 66 porte, en saillie sur sa périphérie interne, des pattes de clipsage respectivement 67A et 67B qui sont simplement clipsées sur la ceinture 12 du collier. Comme on le comprend mieux sur la figure 8, les pattes de clipsage ont une forme en V, dont la pointe est fixée au manchon en 68A ou 68B, par exemple par soudure ou clinchage. En référence à la figure 8, on voit que les extrémités libres des ailes 67'A et 67"A de la patte de clipsage 67A sont recourbées pour venir s'accrocher sur le bord libre interne de la ceinture 12. Les pattes de clipsage réalisées, comme le manchon et la ceinture, en métal, peuvent s'écarter élastiquement pour permettre le clipsage, c'est-à-dire leur accrochage sur la ceinture 12 par retour élastique. Dans l'exemple représenté, on a indiqué la présence de pattes de clipsage 67A et 67B aux extrémités libres du manchon, respectivement voisines des oreilles de serrage 12A et 12B du collier. Bien entendu, on pourrait prévoir davantage de pattes de clipsage, par exemple une troisième patte de clipsage sensiblement diamétralement opposée aux oreilles de serrage. En variante, on pourrait doter le manchon de pattes de clipsage qui coopèrent avec les oreilles de serrage, ou bien avec la vis 14, en particulier avec sa tête et, respectivement, sa tige ou son écrou.

Les pattes de clipsage peuvent être réalisées dans le même matériau que le manchon et, en particulier, à partir du même feuillard ou d'un feuillard analogue. Cependant, dans la mesure où les pattes sont rapportées sur le manchon, on peut au contraire choisir de les réaliser dans un matériau différent de celui du manchon, en particulier un matériau plus résistant mécaniquement et donc spécifiquement adaptés aux contraintes du clipsage. En particulier, les pattes peuvent être réalisées à partir d'un feuillard plus épais ou présentant de meilleures propriétés élastiques. De manière alternative ou complémentaire, les pattes peuvent être rendues plus résistantes mécaniquement par un écrouissage approprié.

Sur les figures qui viennent d'être décrites, les extrémités libres du manchon sont situées de part et d'autre des moyens de serrage. En d'autres termes, le manchon s'interrompt dans la région des moyens de serrage et n'offre donc pas une protection continue.

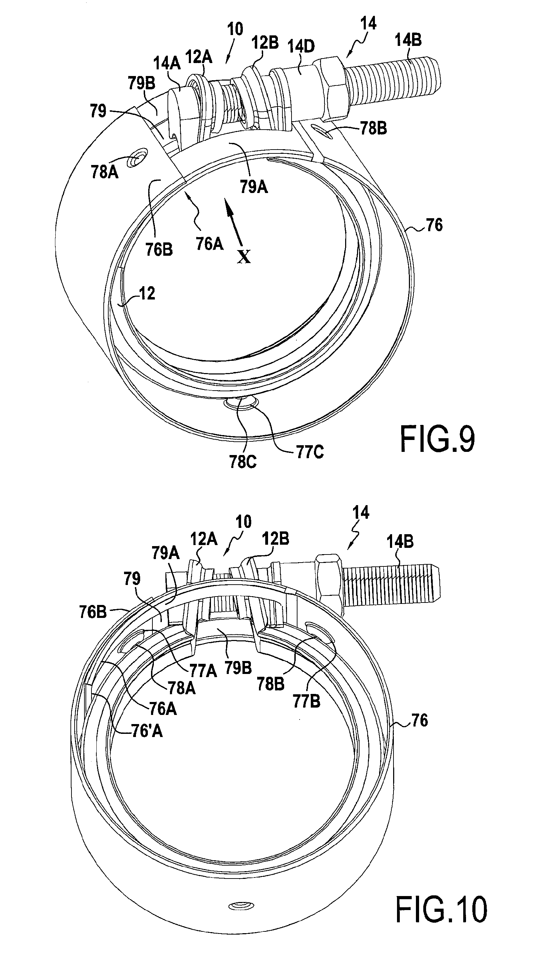

On décrit maintenant en référence aux figures 9 et 10, un deuxième mode de réalisation évitant sensiblement cette interruption. Sur les figures 9 et 10, le dispositif de serrage comprend le collier 10 de la figure 1 (représenté ici à l'état serré). Le manchon 76 est porté par le collier en étant en l'espèce soudé ou clinché sur la ceinture 12 en trois zones de fixation, respectivement 78A, 78B et 78C. Le manchon 76 présente une fenêtre 79 à travers laquelle les oreilles de serrage 12A et 12B du collier dépassent. Ainsi, de part et d'autre de cette fenêtre subsistent des bandes marginales, respectivement 79A et 79B, qui sont axialement situées de part et d'autre des oreilles 12A et 12B du collier. Ainsi, sur les tranches axiales occupées par les bandes marginales, le manchon 76 présente un contour fermé. En l'espèce, la fenêtre 79 est formée à une extrémité 76A du manchon 76 en recouvrement radial avec l'autre extrémité 76B du manchon. Lors du serrage, ces deux extrémités peuvent coulisser l'une par rapport à l'autre pour permettre une réduction du diamètre du manchon 76, accompagnant la réduction du diamètre de la ceinture 12.

La première extrémité 76B du manchon est située au voisinage de la première oreille de serrage 12A, et sa deuxième extrémité 76A est celle qui présente la fenêtre 79 et dont le bout libre 76'A coopère avec la première extrémité pour refermer le contour du manchon.

En l'espèce, le bout libre 76'A de l'extrémité 76A du manchon prend la forme d'un pont qui ferme la fenêtre 79 sur ce bout libre. On évite ainsi que les bandes marginales 79A et 79B n'aient tendance à s'écarter l'une de l'autre dans la direction axiale. On pourrait toutefois prévoir que les bandes marginales soient présentes sans avoir un tel pont.

Comme on l'a indiqué, le manchon est fixé à la ceinture du collier en plusieurs zones de fixation, respectivement 78A, 78B et 78C. Comme on le voit mieux sur la figure 10, l'une de ces zones de fixation, la zone 78A, se trouve dans la fenêtre 79. Pour favoriser l'établissement d'un jeu entre la périphérie externe de la ceinture 12 et la périphérie interne du manchon 76, les zones de fixation sont avantageusement formées dans des bossages, respectivement 77A, 77B et 77C, qui sont en saillie sur la face interne du manchon et coopèrent avec la ceinture. Du côté externe, ces bossages forment des cuvettes, au fond desquelles sont formées les zones de fixation. Du côté interne, les bossages précités forment entretoise entre la périphérie externe de la ceinture 12 et la périphérie interne du manchon 76. Bien entendu, de tels bossages sont parfaitement compatibles avec le mode de réalisation représenté sur les figures précédentes, en particulier avec les variantes des figures 1 à 3. On pourrait également prévoir de tels bossages, faisant simplement office d'entretoise et/ou participant à la fixation, avec les modes de réalisation des figures 5 à 8. Par ailleurs, le manchon 76 des figures 9 et 10 comporte trois bossages, respectivement 77A, 77B et 77C. On pourrait cependant prévoir un nombre différent de bossages, ceux-ci étant de préférence au moins au nombre de 2.

Le dispositif selon l'invention, en particulier la ceinture du collier et le manchon, est de préférence réalisé en métal. Le manchon est quant à lui réalisé de manière à assurer un écran thermique, en limitant la transmission de chaleur entre les objets raccordés et serrés par le dispositif, et la face externe du manchon. Par ailleurs, le manchon est choisi de manière à ne pas gêner le serrage. En particulier, le manchon peut être réalisé à partir d'un feuillard métallique fin, se pliant nettement plus facilement que la ceinture du collier. Par exemple, l'épaisseur du manchon, mesurée radialement, peut être de l'ordre de 0,2 à 0,5 mm pour de l'inox et de 0,4 à 1 mm pour d'autres matériaux tels que de l'aluminium ou de l'acier aluminé.

Par exemple, le manchon peut être réalisé en inox, ou bien en acier aluminé. Pour mieux réfléchir la chaleur vers l'intérieur, il peut être brillant au moins sur sa face interne.

Le manchon ne contribue aucunement au serrage, mais comme indiqué ci-dessus, il ne doit pas le gêner. Dans la mesure où il n'est pas soumis à des efforts particuliers, et où on cherche en général à limiter la masse du dispositif de serrage, il est avantageux de choisir que le manchon ait l'épaisseur la plus fine possible. Pour le cas où cette épaisseur rendrait cependant le manchon trop aisément déformable radialement, on peut souhaiter le doter de moyens de rigidification. Il s'agit par exemple d'une ou plusieurs nervures périphériques 19, réalisées en saillie sur la face interne et/ou la face externe du manchon, comme indiqué en traits mixtes interrompus sur la figure 1. Par « nervure périphérique », on entend une nervure qui s'étend perpendiculairement à l'axe A du collier lorsque le manchon est en place sur le collier, de sorte que cette nervure s'étend dans le sens de la longueur de la bande dans laquelle est formé ce manchon.

Il est par ailleurs possible, comme le montre la figure 8, de faire en sorte que les bords longitudinaux du manchon (bords s'étendant selon la longueur de ce manchon, donc perpendiculairement à l'axe A du dispositif) soient chanfreinés. Ainsi, sur la figure 8, on voit que les bords 66A et 66B du manchon sont légèrement repliés vers l'intérieur à la manière de chanfreins. Ce repli vers l'intérieur permet d'augmenter la rigidité du manchon pour éviter une déformation trop aisée et, en même temps, de limiter l'agressivité de ces bords.

Bien que l'invention puisse s'appliquer à des colliers dont la ceinture est plate, elle est intéressante dans le cas de colliers dont la ceinture présente un creux interne comme sur la figure. En effet, dans ce cas, le manchon peut être porté par le collier en étant naturellement à quelque distance des objets raccordés par le dispositif. Cependant, ainsi qu'on l'a évoqué, des bossages formant entretoise peuvent contribuer à maintenir le manchon à distance de la ceinture. Dans ce cas, de tels bossages contribuent également à maintenir le manchon à distance des objets raccordés par le dispositif.

Il convient enfin de relever que le dispositif de l'invention peut comprendre des moyens de prémontage et d'étanchéité, par exemple du type de ceux décrits dans le document EP 1 451 498.

Sur les figures, on a représenté un manchon de forme globalement cylindrique à base circulaire ou sensiblement circulaire, et de longueur (mesurée selon l'axe A) sensiblement constante. Cependant, en réalité, le manchon peut être conformé pour être adapté à la forme des pièces raccordées par le dispositif et pour favoriser sa fonction d'écran thermique. En particulier, le manchon peut être ovalisé ou bien coudé, ou encore présenter des indentations, par exemple des indentations sur ses bords en déport. Le manchon ne participant pas à l'effort de serrage, une grande liberté est permise quant à sa forme, ce qui permet de l'adapter au mieux aux contraintes de son environnement. Du fait de sa faible épaisseur, le manchon présente une relative souplesse, et sa forme peut même être adaptée in-situ.

## Revendications

1. Dispositif de serrage comprenant un collier de serrage (10 ; 30) ayant une ceinture (12 ; 32) apte à être serrée, **caractérisé en ce qu'**il comprend, en outre, un manchon extérieur (16 ; 36 ; 46 ; 56 ; 66 ; 76) porté par le collier en étant disposé autour de la ceinture, ledit manchon s'étendant axialement de part et d'autre de la ceinture.

2. Dispositif selon la revendication 1, **caractérisé en ce qu'**il existe un jeu (j) entre la périphérie externe de la ceinture (12 ; 32) et la périphérie interne du manchon (16 ; 36 ; 46 ; 56 ; 66 ; 76).

3. Dispositif selon la revendication 1 ou 2, **caractérisé en ce que** la largeur L du manchon (16 ; 36 ; 46 ; 56 ; 66 ; 76), mesurée selon l'axe A de la ceinture (12 ; 32), est au moins égale à trois fois la largeur l de la ceinture.

4. Dispositif selon l'une quelconque des revendications 1 à 3, **caractérisé en ce que** le manchon (16 ; 36 ; 46 ; 56 ; 66 ; 76) est fixé au collier (10 ; 30) en au moins deux zones de fixation espacées (18A, 18B ; 38A, 38B, 38C ; 48A, 48B ; 56A, 56B ; 68A, 68B ; 78A, 78B, 78C).

5. Dispositif selon l'une quelconque des revendications 1 à 4, **caractérisé en ce que** le manchon (76) présente des bossages (77A, 77B, 77C), qui sont en saillie sur la face interne du manchon (76) et qui coopèrent avec la ceinture (12).

6. Dispositif selon la revendication 5, **caractérisé en ce que** au moins une partie des bossages (77A, 77B, 77C) sert de zone de fixation (78A, 78B, 78C).

7. Dispositif selon l'une quelconque des revendications 1 à 6, **caractérisé en ce que** le manchon (16 ; 36) est fixé à la ceinture (12 ; 32) par soudage ou clinchage.

8. Dispositif selon l'une quelconque des revendications 1 à 7, **caractérisé en ce que** le manchon (46 ; 56) présente des pattes de fixation (47A, 47B ; 56A, 56B ; 67A, 67B) aptes à coopérer avec le collier (10).

9. Dispositif selon l'une quelconque des revendications 1 à 5 et 8, **caractérisé en ce que** le manchon (66) coopère avec la ceinture (12) par clipsage ou accrochage.

10. Dispositif selon l'une quelconque des revendications 1 à 5, 8 et 9, **caractérisé en ce que** le collier (10) présente des oreilles de serrage (12A, 12B) aptes à être rapprochées l'une de l'autre par des moyens de serrage et **en ce que** le manchon (56) est porté par le collier via au moins l'un des éléments constitués par les oreilles de serrage et les moyens de serrage.

11. Dispositif selon l'une quelconque des revendications 1 à 10, **caractérisé en ce que** la ceinture (12) présente des oreilles de serrage (12A, 12B ; 34A, 34B) en saillie radiale par rapport à la ceinture (12 ; 32), et **en ce que** le manchon (76) présente une fenêtre (79) à travers laquelle les oreilles de serrage dépassent.

12. Dispositif selon la revendication 11, **caractérisé en ce que** le manchon (76) présente une première extrémité (76B) située au voisinage de la première oreille de serrage (12A) et une deuxième extrémité (76A), qui présente la fenêtre (79) et dont le bout libre (76A) coopère avec la première extrémité.
